# EUROPEAN PATENT APPLICATION

(11) **EP 1 450 242 A2**
(43) Date of publication of application: **25.08.2004**
(21) Application number: 03079055.4
(22) Date of filing: 22.12.2000
(51) Int. Cl.: G06F 3/023

(54) **Navigation**

(30) Priority: 24.12.1999 EP 99403281
(62) Divisional of application: 00987598.0
(71) Applicant: THOMSON Licensing S.A., 92100 Boulogne-Billancourt (FR)
(72) Inventor: Villers, Jean-Stephane, 95800 Cergy (FR); Gentilhomme, Olivier, 75906 Paris Cédex 15 (FR)
(74) Representative: Rosenberg, Muriel Sylvie

(57) **Abstract**

According to this method of assigning a navigation order to a plurality of objects to be displayed at respective positions on a display, these objects are assigned to a plurality of defined directions based on the positions of the objects. The method comprises a step of including ascending or descending a level of hierarchy between these objects.

## Description

The invention relates to navigating between a plurality of objects which are typically displayed on a screen and in preferred embodiments is concerned with navigating between or facilitating selection of objects defined in a document such as an HTML (or similar) document.

Hyper-text markup language (HTML) documents are well known and are commonly used for transmitting information over the Internet. Each document page may contain a number of active areas or objects which can be activated by moving a cursor over the object using a pointing device (such as a mouse) and clicking a button associated with the pointing device. Typical objects may include images, pop-up buttons, radio boxes, check boxes, pop-up lists, links to other documents, selectable text and data entry areas, among others. In general terms, there may be a variety of objects which are selectable or capable of receiving a focus and the invention is preferentially concerned with selection or navigation among such objects.

Pursuant to the invention, it has been proposed to display a document such as an HTML document (or similar) on a device which may not be equipped with a pointing device, particularly a receiver/decoder for a digital television system. The problem arises of navigating between the objects displayed on the screen. As used herein the term "document" is intended to encompass any data structure capable of defining or referencing a plurality of objects among which selection may be made or among which navigation may be performed; this need not be text encoded (as in HTML). The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television. As used herein, the term "digital television system" includes for example any satellite, terrestrial, cable and other system.

In an HTML (or similar) document, objects to be displayed are defined sequentially in the document. It has been proposed that a simple way to navigate between objects in such a document would be simply to step through the object definitions in the order in which they appear in the document. This has the benefit of being simple to implement and ensuring that all objects can be reliably traversed. One proposal is simply to assign an up or left arrow key to move up the list and a down or right arrow key to move down the list.

A problem with this proposal, however, is that, although objects tend to be defined in a document in an order which broadly corresponds to the order in which they are displayed on the screen, there is no direct relation. Thus, whilst it is easy to define in computing terms what the "next" object is, navigation may not be intuitive for a user, who will simply have to step through a number of objects in what may appear to be an arbitrary order to find the desired one. This can be frustrating on pages with large numbers of objects.

According to a first aspect of the present invention, there is provided a method of assigning a navigation order to a plurality of objects to be displayed at respective positions on a display, these objects being assigned to a plurality of defined directions based on the positions of the objects, the method comprising a step of including ascending or descending a level of hierarchy between these objects.

In this way, navigation may be more intuitive as it may be based on the position at which objects are displayed rather than the possibly somewhat arbitrary order in which the objects are defined in a document or the chronological order in which objects are displayed.

Navigation may comprise stepping from one object to another, preferably based on at least one input signal indicating a direction of travel.

Preferably, the method comprises defining a current object and an object to be selected next (a target object) in each of a plurality of directions. Preferably the plurality of directions includes at least four substantially orthogonal directions, more preferably up, down, left, right. Preferably, each direction has a button or other command input associated with it (for example arrow keys on a remote control). The invention is not limited to use of input keys and, in a development, the directions could be selected by means of voice or other commands or by detecting physical movement of a control device.

The method preferably includes highlighting the current object and preferably also (or instead) includes indicating which object is assigned to each direction, preferably in a different manner to the highlighting, for example by means of an arrow or other highlighting.

Preferably, the method includes searching for initial candidate objects in each direction and selecting a chosen candidate object in each direction based on predetermined selection criteria. This can enable more natural selection of objects than simply finding the first available object in a given direction and may enable other factors to be taken into account. The selection criteria may include rules for distinguishing between initial candidate objects of differing sizes. The selection criteria may also include rules for distinguishing between initial candidate objects based on closeness to a preferred direction. The selection criteria may further include rules for distinguishing between initial candidate objects based on chosen candidate objects for one or more other directions. The rules may be implemented in a receiver/decoder using relatively basic instructions, for example, summing, subtracting and comparing using integer values, such that CPU resources required to run the implementation are maintained at a minimum.

Thus, preferably, the method comprises steps of selecting a plurality of candidate objects from the above-mentioned plurality of objects, of selecting from the plurality of candidate objects a set of accepted objects and of assigning the set of accepted objects to directions.

Preferably, objects are assigned to directions in order. This may enable a preference or priority between directions to be established so that the object assigned to a particular direction is dependent on the object(s) (if any) assigned to another direction in a preceding assignment step (if any). This may facilitate avoidance of assignment of objects to multiple directions and may facilitate selection of a "sensible" set of objects to be assigned to all available directions. However, objects may be assigned in parallel or concurrently to different directions, for example by a multi-threaded process.

Preferably, the assignment of objects to directions is such that all objects of interest on a page can be accessed. This may entail assigning objects in a fashion which is not necessarily reversible. That is, moving in one direction and then moving in the opposite direction may not necessarily return to the initial object.

The term "object of interest" as used herein preferably connotes an object with which a user would conceivably choose to interact with or display. By having each object of interest potentially accessible from any other, pages can be browsed more efficiently.

Preferably, in addition to a plurality of "planar" directions (such as, for example, up, down, left, right), navigation may include ascending or descending a level of hierarchy or following a hyper-link, preferably by means of "enter" and "exit" or equivalent commands. This may facilitate traversing of frames and compound objects such as lists.

Preferably, in the case of a list (or other group of objects), the entire list (or group) may be traversed as a single entity at a first level (that is, the entire list may be selected as a single object) and individual items (or sub-groups of items) may be traversed at a second level. The group of objects may be a complex object, such as "TextField", "List", "IsMap", "UseMap" or "Frame".

Similarly, preferably in the case of a document displayed as a plurality of frames, entire frames may be traversed at a first level and objects within each frame may be traversed at a second level.

Preferably, the method according to the invention further comprises classifying the plurality of objects into primary and secondary candidate objects, with respect to a or the current object.

The step of classifying the plurality of objects preferably comprises determining whether or not each object fulfils a particular positional relationship with respect to the current object.

The invention also provides an apparatus for assigning a navigation order to a plurality of objects at respective positions on a display, comprising means (for example an assignment processor) for assigning these objects to a plurality of defined directions based on the positions of the objects, the apparatus further comprising means for ascending or descending a level of hierarchy between these objects.

The particular features and advantages of the apparatus are similar to those of the method of assigning a navigation order to a plurality of objects and they are therefore not repeated here.

However, it is noted that the apparatus comprises means (such as a search engine) for selecting a plurality of candidate objects from the plurality of objects, means for selecting from the plurality of candidate objects a set of accepted objects and means for assigning the set of accepted objects to directions.

Preferably, the method is implemented in a receiver/decoder; the invention extends to a receiver/decoder arranged to implement a method according to any of the above aspects. In such a case, the receiver/decoder preferably has a remote control and keys of the remote control are assigned to directions.

The various processors mentioned above as examples of suitable means may be integrated into a single processor and implemented by appropriate subcomponents or by software running on the processor. In a preferred implementation, most or all apparatus features are provided by appropriate software running on a hardware platform including a processor, memory and a display generator. The processor preferably provides an execution environment for running an application, for example, by providing an operating system on which the application can run, or by providing a virtual machine on which the application can run.

In further aspects, the invention provides a computer program product or computer readable means including instructions for performing a method according to any of the above method aspects.

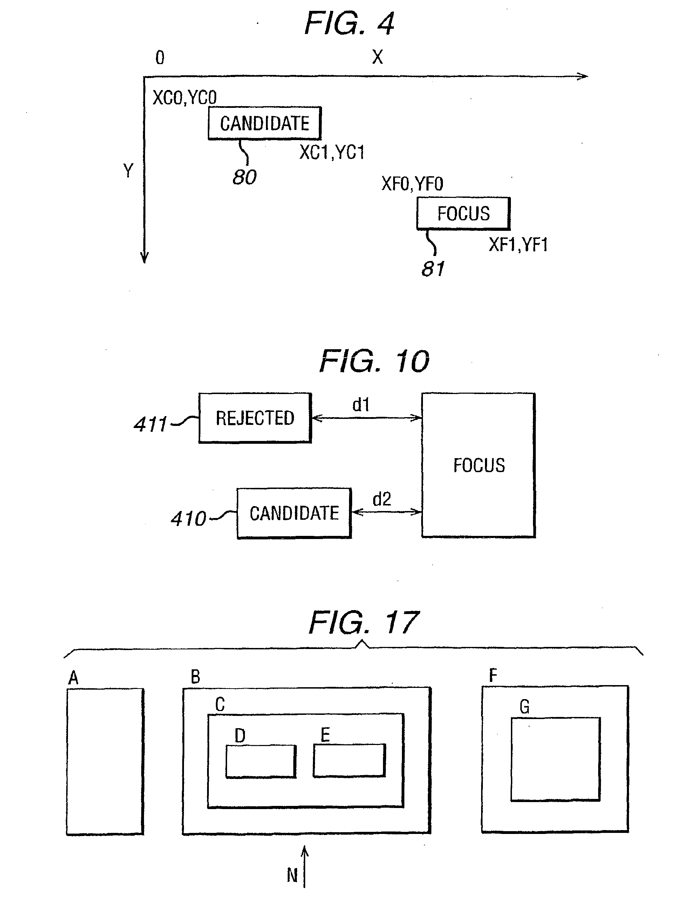

The invention further provides apparatus or a method substantially as any one herein described with reference to or as illustrated in the accompanying figures or any figure, particularly Figure 4 onwards.

An embodiment of the invention will now be described, with reference to the accompanying drawings, in which:
Figure 1 shows an overview of a typical digital television system;
Figure 2 is a block diagram of a receiver/decoder;
Figure 3 shows the architecture of a receiver/decoder;
Figure 4 illustrates an example of an implementation according to a preferred embodiment;
Figures 5 illustrate four principle priority zones according to a preferred embodiment;
Figure 6 illustrates definition of a North East non-priority zone according to a preferred embodiment;
Figure 7 illustrates definition of a North West non-priority zone according to a preferred embodiment;
Figure 8 illustrates definition of a South East non-priority zone according to a preferred embodiment;
Figure 9 illustrates definition of a South West non-priority zone according to a preferred embodiment;
Figure 10 illustrates selection between objects at differing distances according to a preferred embodiment;
Figures 11 illustrate selection between objects at differing heights according to a preferred embodiment;
Figure 12 illustrates selection of a centre candidate objects in an upper or lower priority zone according to a preferred embodiment;
Figure 13 illustrates selection of a left candidate objects in an upper or lower priority zone according to a preferred embodiment;
Figure 14 illustrates selection of a right candidate objects in an upper or lower priority zone according to a preferred embodiment;
Figures 15 illustrate rules for selection among left right and centre candidates according to a preferred embodiment;
Figure 16 illustrates selection of secondary candidates according to a preferred embodiment;
Figure 17 illustrates selection between overlapping objects according to a preferred embodiment;
Figures 18 illustrate further control of North and South candidates according to a preferred embodiment;
Figure 19 illustrates navigation through a typical document according to a preferred embodiment;
Figure 20 illustrates the process of selecting candidate objects according to a preferred embodiment;
Figure 21 illustrates a first step in the process of selecting candidate objects according to a preferred embodiment;
Figure 22 illustrates a second step in the process of selecting candidate objects according to a preferred embodiment;
Figure 23 illustrates a third step in the process of selecting candidate objects according to a preferred embodiment;
Figure 24 illustrates the process of selecting candidate objects according to a variant of the preferred embodiment;
Figure 25 illustrates a fourth step in the process of selecting candidate objects according to a preferred embodiment; and
Figure 26 illustrates a fifth step in the process of selecting candidate objects according to a preferred embodiment.

By way of background, there will now be described a receiver/decoder for a digital television system, which is the preferred application of the invention; the invention may be employed in other devices, however, for example personal or hand held or laptop computers or other communication devices.

### Overview of A Digital Television System

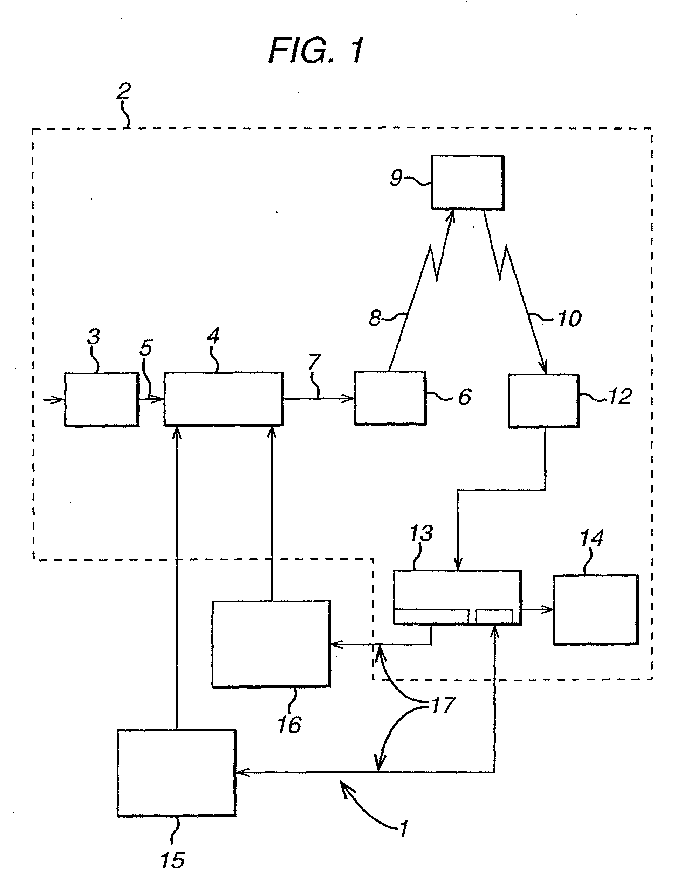

An overview of a digital television system 1 is shown in Figure 1. The invention includes a mostly conventional digital television system 2 which uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the receiver/decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the receiver/decoder 13 and smartcard, the end user may purchase commercial offers in either a subscription mode or a pay-per-view mode.

An interactive system 16, also connected to the multiplexer 4 and the receiver/decoder 13 and again located partly in the broadcast centre and partly in the receiver/decoder, enables the end user to interact with various applications via a modemmed back channel 17. The modemmed back channel may also be used for communications used in the conditional access system 15.

### Receiver/Decoder

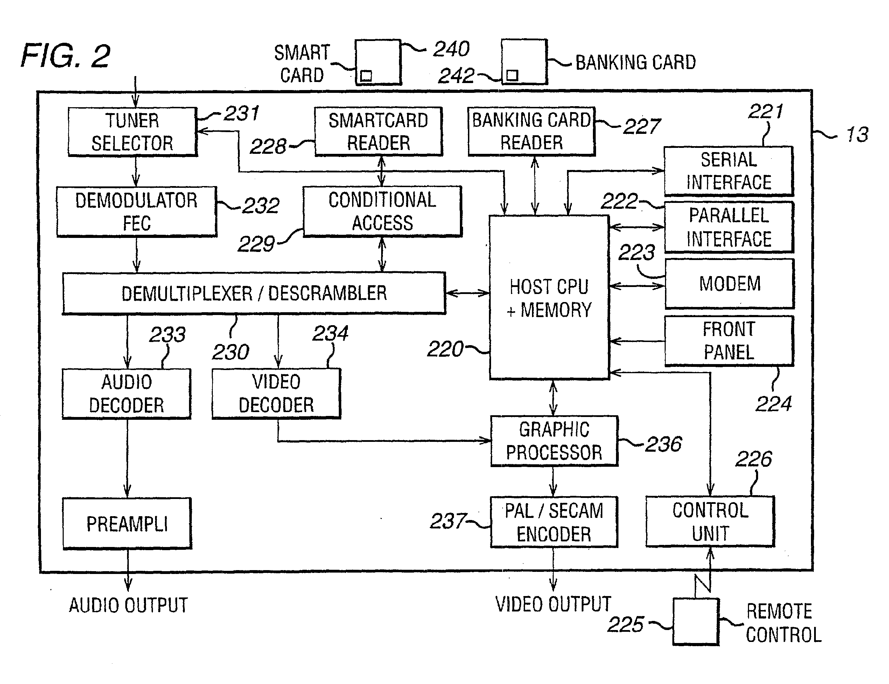

Referring to Figure 2, the various elements of receiver/decoder 13 will now be described in terms of functional blocks.

The receiver/decoder 13, which may be, for example, a digital set-top box (DSTB), comprises a central processor 220 including associated memory elements and adapted to receive input data from a serial interface 221, a parallel interface 222, a modem 223 (connected to the modem back channel 17 of Fig. 1), and switch contacts 224 on the front panel of the decoder.

The receiver/decoder is additionally adapted to receive inputs from an infra-red remote control 225 via a control unit 226 and also possesses two smartcard readers 227, 228 adapted to read bank and subscription smartcards 242, 240 respectively. The subscription smartcard reader 228 engages with an inserted subscription card 240 and with a conditional access unit 229 to supply the necessary control word to a demultiplexer/descrambler 230 to enable the encrypted broadcast signal to be descrambled. The decoder also includes a conventional tuner 231 and demodulator 232 to receive and demodulate the satellite transmission before being filtered and demultiplexed by the unit 230.

As used in this description, an application is preferably a piece of computer code for controlling high level functions of preferably the receiver/decoder 13. For example, when the end user positions the focus of remote control 225 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of Receiver/Decoder

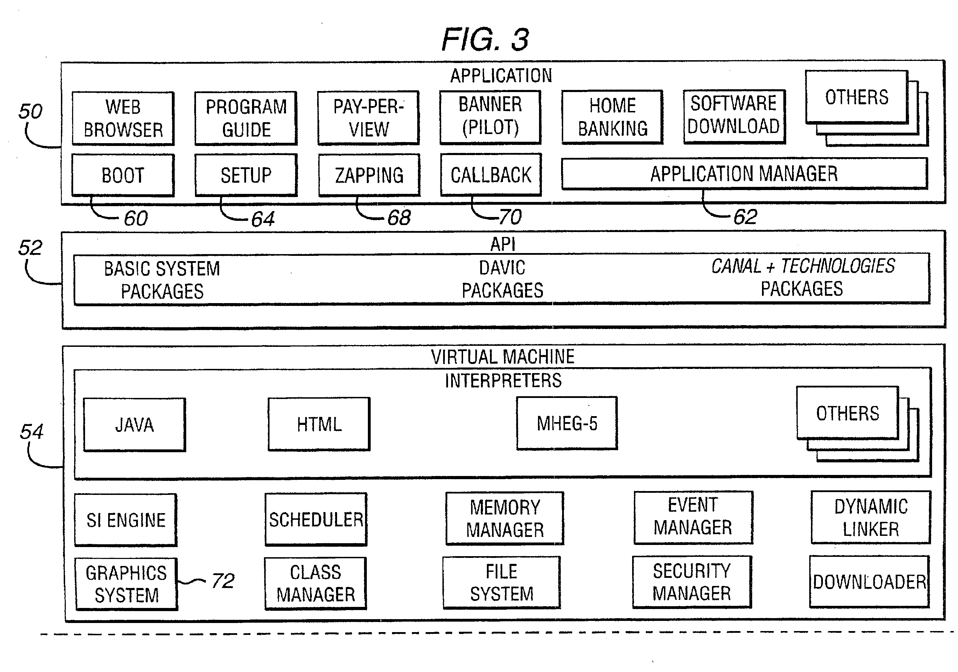

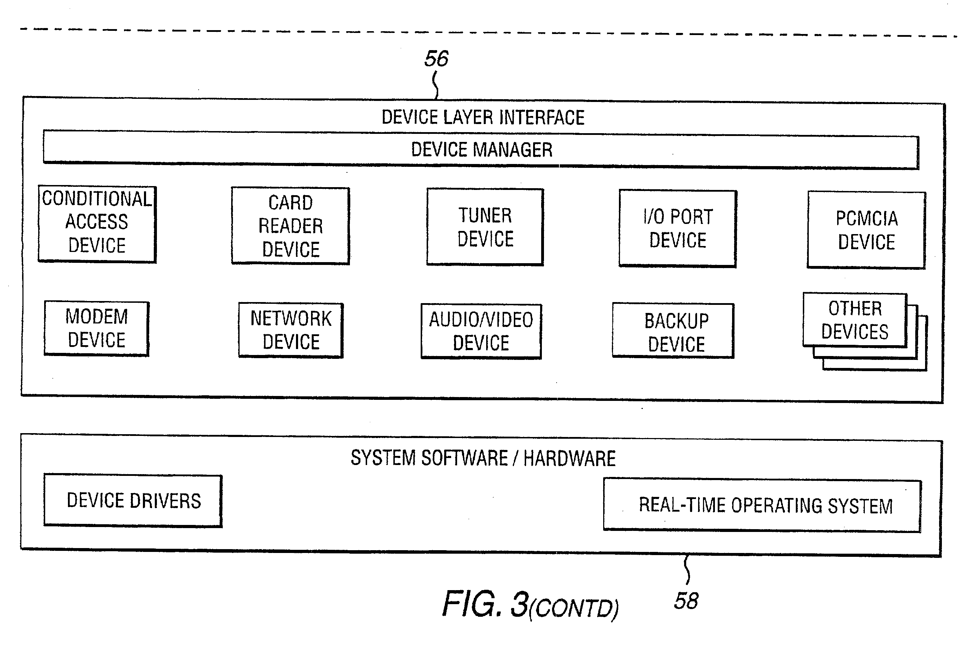

The receiver/decoder contains five software layers, organised so that the software can be implemented in any receiver/decoder and with any operating system. Referring to Figure 3, the various software layers are Application Layer 50, Application Programming Interface (API) layer 52, Virtual Machine Layer 54, Device Layer 56 and System Software/Hardware Layer 58.

The Application Layer 50 encompasses applications which are either resident in or downloaded to the receiver/decoder. They may be interactive applications used by customers, written in, for example, Java, HTML, MHEG-5 or other languages, or they may be applications used by the receiver/decoder to run such applications. This layer is based on a set of open Application Programming Interfaces (APIs) provided by the Virtual Machine layer. This system allows applications to be downloaded to flash or RAM memory in the receiver/decoder on-the-fly or on demand. The application code can be transmitted in compressed or uncompressed format using protocols such as Data Storage Media Command and Control (DSMCC), Network File Server (NFS) or other protocols.

Interactive applications are applications which the user interacts with, for example, to obtain products and services, such as electronic program guides, telebanking applications and games. The following resident applications are used to manage interactive applications:
o Boot. The Boot application 60 is the first application launched when the receiver/decoder is powered on. The Boot application starts the different "Managers" in the Virtual Machine, the first being the Application Manager 62.
o Application Manager. The Application Manager 62 manages the interactive applications which are run in the receiver/decoder, that is, it starts, stops, suspends, resumes, handles events and deals with communication between applications. It allows multiple applications to run at once, and thus is involved in the allocation of resources among them. This application is completely transparent to the user.
o SetUp. The purpose of the SetUp application 64 is to configure the receiver/decoder, primarily the first time it is used. It performs actions such as scanning for T.V. channels, setting the date and time, establishing user preferences, and so on. However, the SetUp application can be used at any time by the user to change the receiver/decoder configuration.
o Zapping. The Zapping application 68 is used to change channels using the Program-up, Program-down and numeric keys. When another form of zapping is used, for example, through a banner (pilot) application, the Zapping application is stopped.
o Callback. The Callback application is used to extract the values of various parameters stored in the receiver/decoder memory and return these values to the commercial operator via modemmed back channel 17, or by other means.
o Web-browser. This is used to receive and display web-pages which may be sent as HTML code or similar via the modem or the digital television signal. The application includes or is linked to the navigation tool to be described below, to enable navigation of web pages by means of arrow keys or similar on the remote control for the receiver/decoder.

The API layer 52 provides high-level utilities for interactive application development. It includes several packages which make up this high-level API. The packages provide all the functionality necessary to run interactive applications. The packages are accessible by the applications.

In a preferred embodiment the API is adapted to run applications written in the Java programming language. Furthermore, it can interpret HTML and other formats, such as MHEG-5. Besides these interpreters, it also includes other packages and service modules which are detachable and extensible as requirements dictate.

The Virtual Machine layer 54 is composed of language interpreters and various modules and systems. It consists of everything necessary to receive and execute interactive applications in the receiver/decoder.

The Device Interface layer 56 includes a Device Manager and devices. Devices are software modules which consist of the logical resources necessary for management of external events and physical interfaces. The Device Layer manages communication channels between drivers and applications and provides enhanced error exception checking. Some examples of managed devices are: card readers, modems, network, PCMCIA (Personal Computer Memory Card International Association), LED display and so on. Programmers do not have to deal with this layer directly, since the API layer controls the devices from above.

The System Software/Hardware layer 58 is provided by the manufacturer of the receiver/decoder. Because of the modularity of the system and because services supplied by the OS (such as event scheduling and memory management) are part of the Virtual Machine, the higher layers are not tied to a particular real-time operating system (RTOS) or to a particular processor.

As stated above, the receiver/decoder includes an application for displaying web pages, for example received as HTML code from the digital television signal or from the modem, the application including code for highlighting hyperlinks and other objects capable of receiving the focus in the web page. This includes, or is linked to the navigation tool to be described, to facilitate browsing using a remote control or other input device (not shown) associated with the receiver/decoder.

### Embodiment of Navigation Method - Navigation Tool

The preferred embodiment of the navigation tool is a minimal system with a remote control, where the user may access every frame in an HTML (or similar) document, and every link within each frame, while at the same time respecting the structure of the document.

By way of background, HTML documents define various objects, examples of which follow (most particularly hyperlinks) which are capable of "receiving focus", that is being highlighted (in a conventional arrangement, by moving a mouse pointer over or near the object) and then subsequently actuated or selected (in a conventional arrangement, by clicking a mouse button) to cause a jump to the hyperlink or other defined action. In the following, it is to be understood that there may be a current object which has the focus and a plurality of target or candidate objects which may receive the focus in response to a move command. On receipt of an enter or other actuation command, the object having the focus at the time will be actuated, for example a jump will be made to the corresponding hyperlink.

It will be noted that, in the preferred embodiment, there will normally be one object (the current object) which has the focus, whereas in a conventional arrangement, there may be no objects which have the focus, focus only being assigned when a pointer is over an object. The feature of having a default object having the focus may be independently provided, as may the feature of providing a starting object having the focus without requiring user selection of an object. The starting object may be selected according to a predetermined algorithm, for example to determine an approximately middlemost object on a page or may simply be the first or top left object displayed.

In a preferred implementation, six interface elements are used to provide movement from within an HTML document. There are four controls to move up, down, left and right within the document. In this description, the directions up, down, right and left and (respectively) North, South, East and West are used interchangeably (except where explicitly stated or where the context requires otherwise) to refer to directions on an essentially planar display and are not to be construed as limited to any particular orientation either geographically or with respect to a user. Two other controls allow movement up and down the document hierarchy or to give the focus to complex objects within the document, to allow the editing of Text Field objects, for example. The different actions which are available are:
■ Movement to the left
■ Movement to the right
■ Movement upward
■ Movement downward
■ Climbing a level in the document hierarchy, or 'exiting' a complex hyperlink
■ Descending a level in the document hierarchy, or 'entering' a complex hyperlink

Any remote control or input device capable of providing these six distinguishable inputs to the navigation tool may be used, so the remote control will not be described in detail.

Navigation in an HTML document is effected from active object to active object. If there is no candidate active object available in the selected direction, a scrolling of the document will be triggered in order to display objects possibly contained in the document but not presently displayed (this is a preferred feature, which may be provided independently). If the document cannot be scrolled, the navigation attempts to proceed to a parent object; that is, it climbs to an HTML document at a higher level in the document hierarchy.

### Definition of the Navigable Elements in An HTML Document

### Frames

Frames consist of an HTML document, and may contain other frames which are usually objects which may be navigated through. The following table lists actions which are undertaken in response to respective controls.

| **Control** | **Action** |
|---|---|
| Left | Move to the frame to the left of the current frame |
| Right | Move to the frame to the right of the current frame |
| Up | Move to the frame above the current frame |
| Down | Move to the frame below the current frame |
| Enter | Select the first hyperlink in the current frame |
| Exit | Lose the focus and give the focus to the parent object |

### Hyperlinks

There exist three types of hyperlinks:

### IsMap Hyperlinks

These consist of an image. A cursor is placed over the image and can be moved within the boundaries of the image. The selection of this type of hyperlink leads to the dispatch of a request containing the associated URL (an associated link to another object) and the current cursor position.

The following table lists actions which are undertaken in response to respective controls to navigate between IsMap hyperlinks.

| **Control** | **Action** |
|---|---|
| Left | Move the cursor to the left |
| Right | Move the cursor to the right |
| Up | Move the cursor up |
| Down | Move the cursor down |
| Enter | Send a request with the current cursor position |
| Exit | Lose the focus and give the focus to the parent object |

It should be noted that if a change of scale is effected during the display of the HTML page, the real coordinates of the cursor will be calculated.

### UseMap Hyperlinks

These consist of an aggregation of 'sensitive' polygonal, rectangular or circular zones, each corresponding to a URL. Each zone is accessible by means of the four directional controls. The navigation within this type of hyperlink can be complex (for example, a map of the United States where each state is a sensitive zone).

The following table lists actions which are undertaken in response to respective controls to navigate between UseMap hyperlinks.

| **Control** | **Action** |
|---|---|
| Left | Move to the sensitive zone to the left of the current zone |
| Right | Move to the sensitive zone to the right of the current zone |
| Up | Move to the sensitive zone above the current zone |
| Down | Move to the sensitive zone below the current zone |
| Enter | Send a request with the associated URL |
| Exit | Lose the focus and give the focus to the parent object |

### Text Hyperlinks

These consist of a rectangular zone which can contain several objects placed side by side in the direction of writing. The objects which constitute a text hyperlink can flow over several consecutive lines of a document.

The following table lists actions to undertake in response to determined controls to navigate between Text hyperlinks.

| **Control** | **Action** |
|---|---|
| Left | Move the focus to the hyperlink to the left of the current element |
| Right | Move the focus to the hyperlink to the right of the current element |
| Up | Move the focus to the hyperlink above the current element |
| Down | Move the focus to the hyperlink below the current element |
| Enter | Send a request with the associated URL |
| Exit | Does nothing |

### Forms

A form is an object which may be understood as a set of objects which are treated as text hyperlinks. The form object is not displayed and each object within it can receive the focus.

### Description of the Algorithm for Selecting Hyperlink Objects

### Definition of the Current Focus

The algorithm described hereunder may be implemented using basic instructions, for example summing, subtracting and comparing applied to integer values. In this way CPU resources required from the received decoder may be reduced to a minimum when running the algorithm implementation. Referring to Fig. 4, an example of an implementation using basic instructions will be explained. A candidate object 80 is referred to using coordinates XCO, YCO and XC1, YC1 of two of its opposite corners. In a similar manner a Focus object (current object) 81 is referred to using coordinates XFO, YFO and XF1, YF1. In order to determine if the candidate object 80 is located to the East of the Focus object 81, the coordinates XC1 and XF0 are compared to see if XC1 is smaller than XFO.

The current focus is preferably defined by a rectangle corresponding to the zone defined by a hyperlink object (a rectangle is computationally simple to implement). A hyperlink having the focus is rejected from the search for candidate objects.

### Definition of the Search Zones

Four priority zones of North, South, East and West are defined, and these correspond to the elongation of the object having the focus in the four geographical directions. These zones have priority in that they respect the structure of the document. It should be noted that, although these four directions are used (this may be both computationally simple to implement and allow easy and intuitive travel through a document), other possibilities may be used. In a development, a direction may be defined by polar selection means, based on an angular input or clockwise or anticlockwise directional signals and one or more search zones may be defined based on the directional signals; in such a case an object may be assigned to only a single direction at a time, the direction itself being varied to select alternative objects; the invention extends to such embodiments, and such a feature may be independently provided.

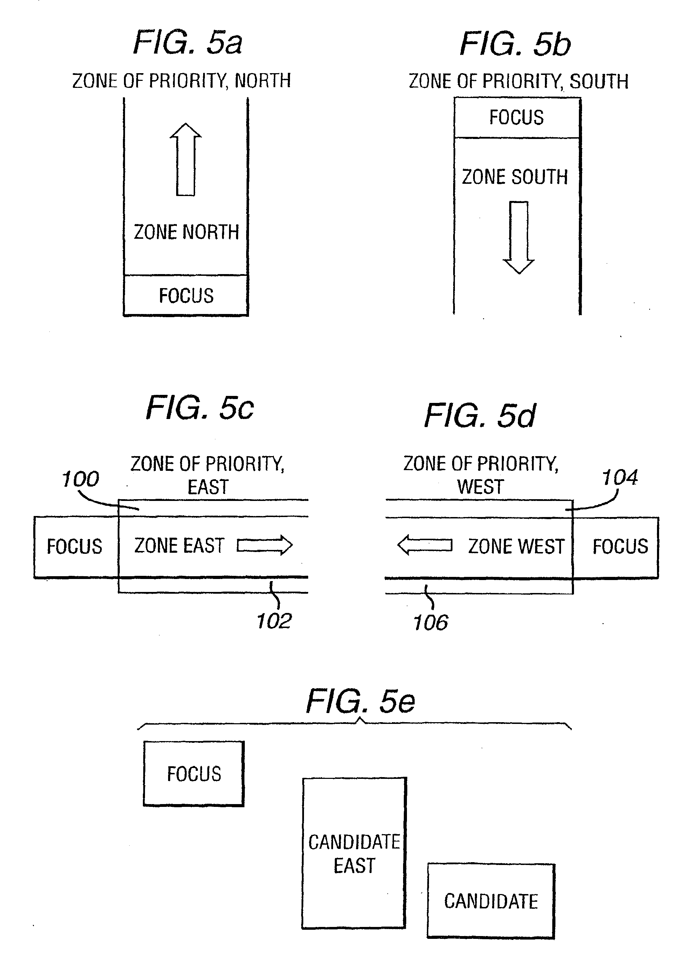

These zones are shown in Figure 5, with Figs. 5a to 5d depicting respectively a zone labelled "Focus" and adjacent North, South, East and West priority zones.

In a preferred embodiment the East and West priority zones are extended by adjacent zones at their North and South boundaries. Referring to Figs. 5c and 5d, adjacent zones 100, 102 and 104, 106 of respectively the East and West priority zones are shown.

Four non-priority zones of North-East, North-West, South-East and South-West are dynamically defined as a function of the position of the East and West candidate objects. These zones are used to reassign the directions which have no candidate object in the priority zones and to allow the algorithm to be able to find every interactive object in the document. The dynamic calculation of these zones as a function of the laterally located candidate objects makes it possible to avoid (preferably at least for the North and South direction) the retention of objects located behind an East or West (right or left) candidate, as is illustrated schematically in Fig. 5e. The provision of both priority and non-priority zones is a preferred feature which may be provided independently or in combination with other features and is not limited to the specific zones described herein.

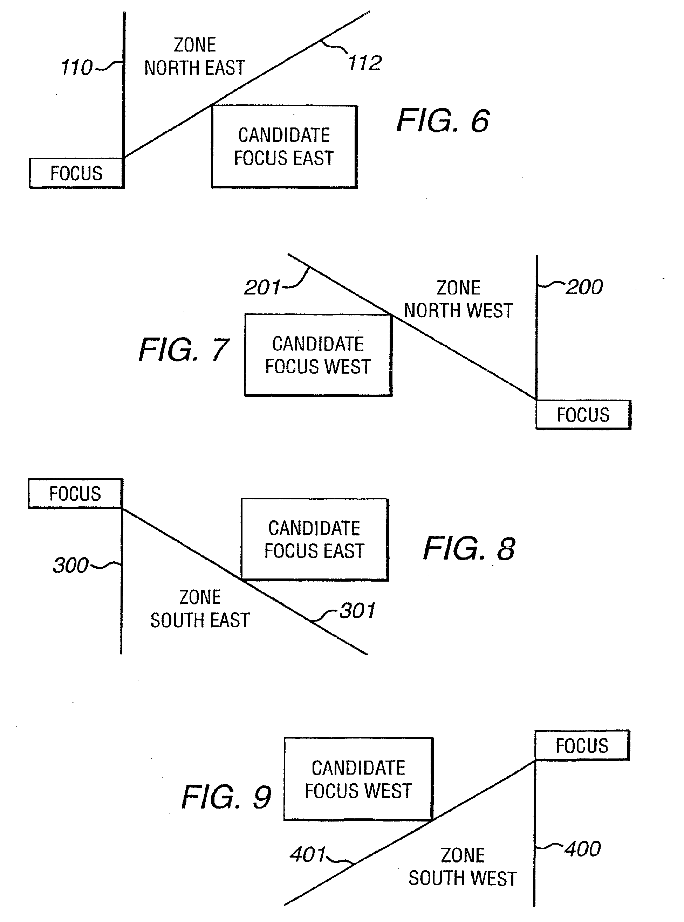

Referring to Fig. 6, a North East non-priority zone is defined by the right hand border 110 of the North priority zone (as shown in Fig. 5a) and the line 112 passing from the top right corner of the current object (the object having the focus) to the top left corner of the highest "candidate East" or Eastern candidate object. If there is no candidate East, or if the upper border of the highest candidate East is situated below the upper border of the current object, the border of the zone is defined by the upper border of the East priority zone, as shown in Fig. 5c.

Referring to Fig. 7, the North West non-priority zone is defined in a complementary manner, with reference to the North priority zone (as shown in Fig. 5a) and Western candidate object or West priority zone. That is, the zone is defined by the left hand border 200 of the North priority zone and the line 201 passing from the top left corner of the current object (the object having the focus) to the top right corner of the highest "candidate West" or Western candidate object. If there is no candidate West, or if the upper border of the highest candidate West is situated below the upper border of the current object, the border of the zone is defined by the upper border of the West priority zone as shown in Fig. 5d.

Referring to Fig. 8, the South East non-priority zone is similarly defined, with reference to the South priority zone (as shown in Fig. 5b) and Eastern candidate object or East priority zone. That is, the zone is defined by the right hand border 300 of the South priority zone and the line 301 passing from the bottom right corner of the current object (the object having the focus) to the bottom left corner of the Southmost "candidate East" or Eastern candidate object. If there is no candidate East, or if the upper border of the Southmost candidate East is situated above the lower border of the current object, the border of the zone is defined by the lower border of the East priority zone as shown in Fig. 5c.

Referring to Fig. 9, the South West non-priority zone is similarly defined, with reference to the South priority zone (as shown in Fig. 5b) and Western candidate object or West priority zone. That is, the zone is defined by the left hand border 400 of the South priority zone and the line 401 passing from the bottom left corner of the current object (the object having the focus) to the bottom left corner of the Southmost "candidate West" or Western candidate object. If there is no candidate West, or if the upper border of the Southmost candidate West is situated above the lower border of the current object, the border of the zone is defined by the lower border of the West priority zone as shown in Fig. 5d.

It is a preferred feature that candidate (target) objects are selected in order (and this feature may be independently provided). Having explained one possible definition of priority and non-priority zones, a preferred selection method will now be described; it should be appreciated that similar principles may be applied if the priority and non-priority zones are defined differently, and also that other orders may be used. In the first step, searching for candidates is confined to the East and West priority zones and all objects intersecting these zones are identified as potential candidates.

In the preferred embodiment where the East and West zones are extended by adjacent zones (as shown with references 100, 102, 104 and 106 in Figs. 5c and 5d) the searching for candidates may be extended to these adjacent zones as well, in order to identify objects close the East and West priority zones as potential candidates.

The list of potential candidates is then refined by a further selection process, as will now be described; this two stage selection process may be provided as an independent preferred feature, even if different selection mechanisms are employed. Several rules will be described; each may be provided independently or in combination with other rules, the combination of rules described herein being particularly preferred as it leads efficiently to a "sensible" set of candidate objects.

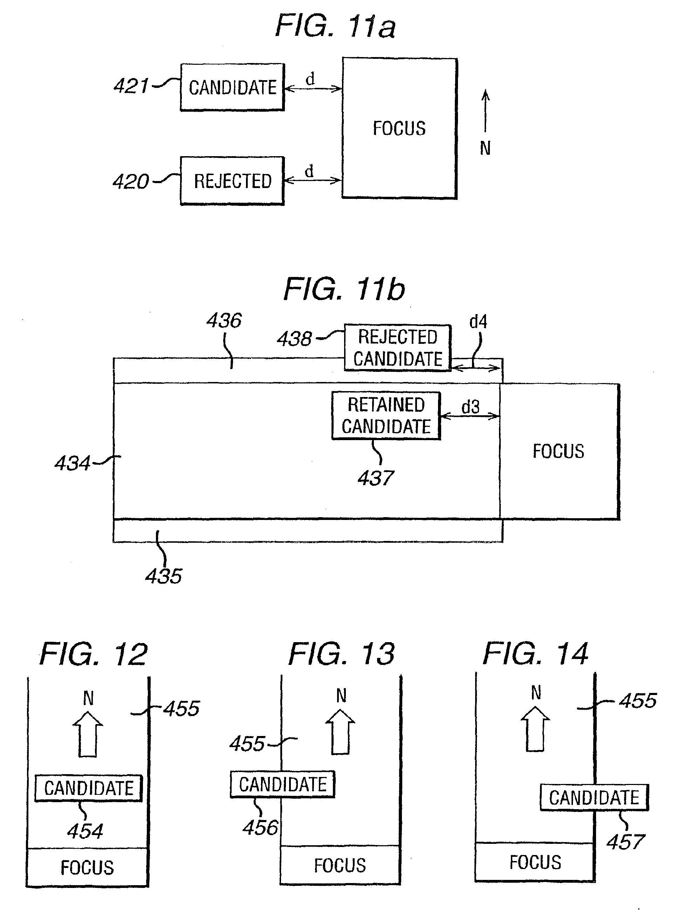

Referring to Fig. 10, objects 410 and 411 at distances d2 and dl from a current object labelled "Focus" are shown, If a rule states that objects closer to the current object are retained in preference to further objects then the object 410 is retained in preference to the object 411, the distance d2 being smaller than the distance dl.

Referring to Fig. 11 a, objects 420 and 421 at the same distance d from a current object labeled "Focus" are shown. If a rule states that in the event of objects being at identical distances, the highest object is retained (highest meaning the most Northerly), then the object 421 is retained in preference to the object 420, since the object 421 is situated to the North of the object 420.

Referring to Fig. 11 b, an object labelled "Focus" and its West priority zone 434 extended by adjacent zones 435 and 436 is shown. An object 437 is located in the West priority zone 434 at a distance d3 from the Focus object. An object 438 intersecting the adjacent zone 436 which extends the West priority zone 434 is located at a distance d4 from the Focus object, the value of d4 being smaller than the value of d3. Although the object 438 is closer to the Focus object than the object 437, a rule may be that the object 437 is retained because the object 438 intersects the adjacent zone 436 only, that is, it does not overlap the West priority zone 434.

In the second step, a search is made for North and South candidates in the North and South priority zones, as well as secondary candidates in the secondary zones.

Upper and lower candidates are considered as priority candidates when they intersect one of the North and South zones.

Two candidates are considered to be on the same line in the following cases:-
■ Both intersect the current object;
■ One envelops the other;
■ Both are at the same distance (vertical distance between nearest horizontal borders, that is high border of current object to low border of candidate for upper candidate and vice versa) from the current object.

In the case of two candidates being considered to be on the same line, they are classified as follows:-
■ Referring to Fig. 12, an object 454 totally within a priority zone 455 is classed as a centre candidate.
■ Referring to Fig. 13, an object 456 intersecting the left border of the priority zone 455 is classed as a left candidate.
■ Referring to Fig. 14, an object 457 intersecting the right border of the priority zone 457 is classed as a right candidate.

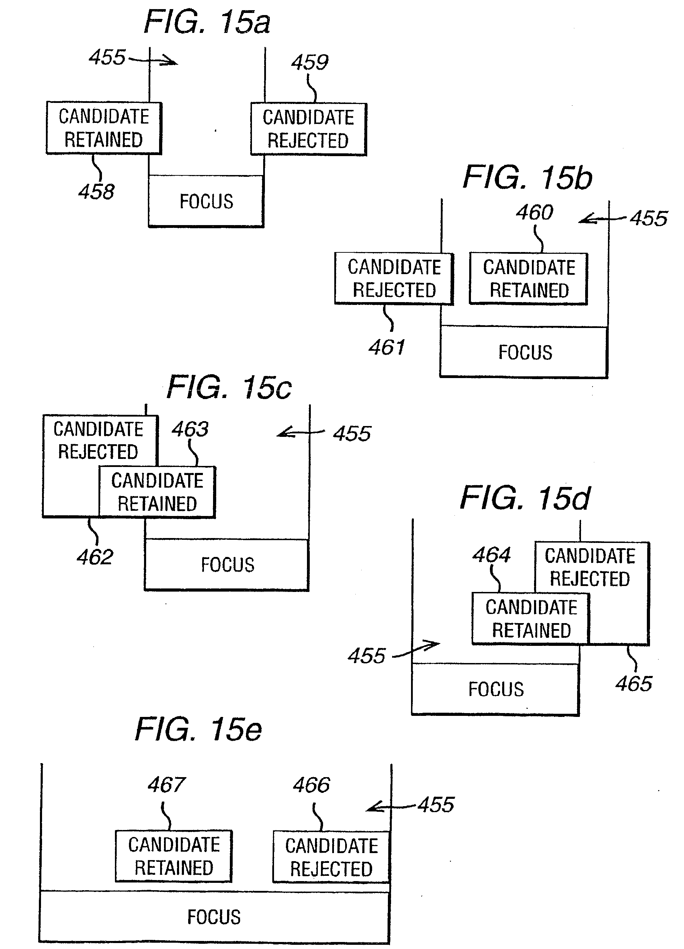

Referring now to Figs. 15a to 15e, selection between two candidates considered to be on the same line will be explained. Although the precise priorities need not be used, it will be noted that the algorithm described is asymmetric (in this example it favours a left candidate over a right candidate). This feature of asymmetry is important and may be independently provided; it is better at ensuring that all objects can eventually be traversed than a symmetrical algorithm, although an element of randomness could if desired be built into a largely symmetrical algorithm.

The following rules may be applied:-
■ Referring to Fig. 15a, a left candidate 458 is retained in preference to a right candidate 459.
■ Referring to Fig. 15b, a centre candidate 460 is retained in preference to a left 461 or right candidate.
■ Referring to Figs. 15c and 15d, if two candidates are of the same type, the one retained is the one whose inner border is further within the zone 455, for example in the case of two left candidates 462 and 463 (see Fig. 15c), the one whose right border is rightmost is retained, that is, the candidate 463, and vice versa; hence in Fig. 15d, in the case of two right candidates 464 and 465, the one whose left border is leftmost is retained, that is, the candidate 464.
■ Referring to Fig. 15e, in the case of two centre candidates 466 and 467, the one whose centre is closest to the centre of the current object is retained.

If the candidates are not considered as being on the same line, the candidate retained is the one closest to the centre of the current object.

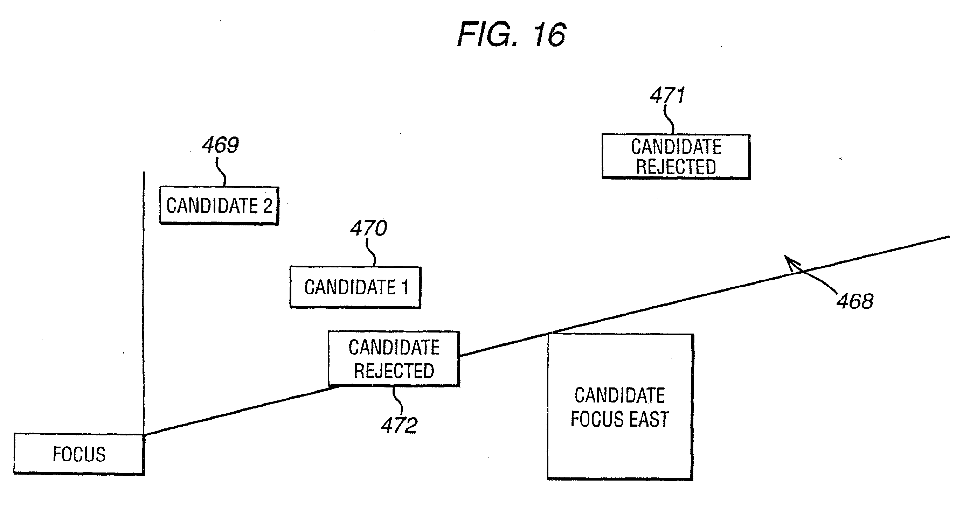

Referring to Fig. 16, a candidate is considered a secondary candidate if it (that is, its encompassing rectangle) is situated entirely within a secondary zone 468, as is the case for candidates 469, 470 and 471. Two (preferably) secondary candidates are retained from each secondary zone. Hence the two secondary candidates 469 and 470 are retained whereas the secondary candidate 471 is rejected. A candidate 472 whose encompassing rectangle is not entirely situated in the secondary zone 468 may not be considered as a secondary candidate and is therefore rejected.

A (preferable but optional) third step makes it possible to assign a secondary candidate to a direction which does not have a candidate or to assign a single candidate to two different directions. This step can also resolve problems of objects enveloping others.

Complementary methods are used for reassignment of objects to East and West and to North and South directions; below assignment to only one of a pair of directions will be explained in detail with the complementary direction mentioned in parentheses; the same principles apply mutatis mutandis.

To assign objects to the East (or West) direction, secondary candidates from the North East and South East (or North West and South West) are considered. The candidate retained is the nearest in the North-South direction to the current object; if there are objects at the same distance, the object retained is the nearest in the East-West direction.

Similarly, to assign objects to the North (or South) direction, secondary candidates from the North East and North West (or South East and South West) are considered. The candidate retained is the nearest in the North-South direction to the current object; if there are objects at the same distance, the object retained is the nearest in the East-West direction. If there are no objects in the secondary zones, the candidate is selected from the East and West objects, preferably those situated above (below) the candidate object; the reassignment of the North (or South) direction to a laterally situated candidate enables movement to the highest (or lowest) object.

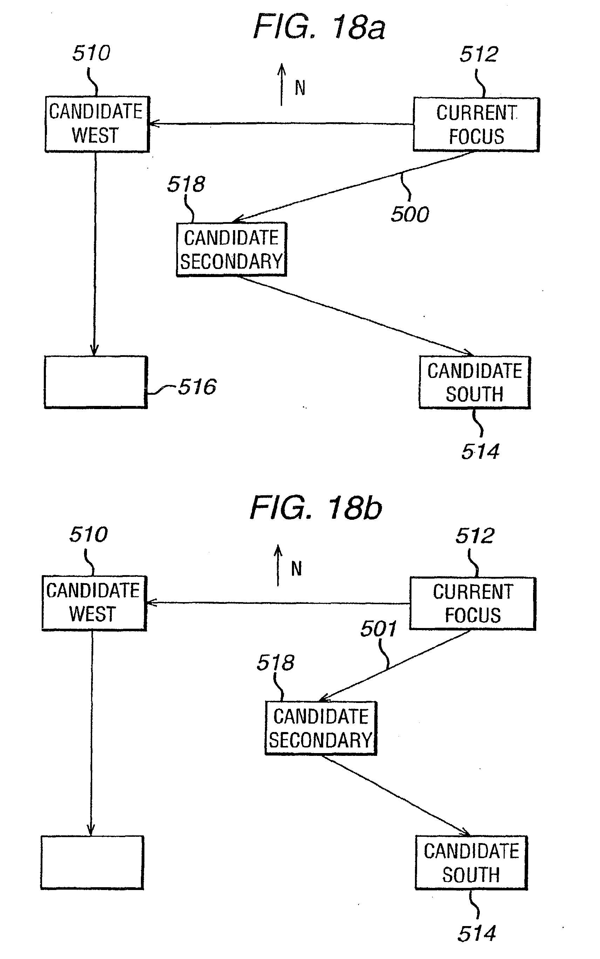

With reference to Fig. 17 a plurality of objects A, B, C, D, E, F and G are shown. An object may be enveloped by another object, if the encompassing rectangle of the first object is situated entirely in the encompassing rectangle of the second object. In Fig. 17, the objects D and E are shown enveloped by the object C, which in turn is enveloped by the object B. The object G is enveloped by the object F.

There will now be described an algorithm for dealing with objects which envelop others. This enables movement in a given direction towards an object which is most enveloped, for example from the object B towards the object C, from the object C towards the objects D and E and from the object F towards the object G (this is a preferred feature which may be provided independently, and using alternative algorithms to the preferred algorithm described herein). In a preferred feature, when all the enveloped objects have been traversed, the direction of traverse is inverted until all the enveloping objects have been traversed.

Referring to the table below, the effect of the above rules on the objects depicted in Fig. 17 will be explained.

| **Current Object** | **Candidate East** | **Candidate West** |
|---|---|---|
| A | B | NO CANDIDATE |
| B | C | A |
| C | D | B |
| D | E | C |
| E | C | D |
| C | B | E |
| B | F | C |
| F | G | B |
| G | F | F |
| F | NO CANDIDATE | G |

A fourth step will now be explained, with reference to Fig. 18, which makes it possible to select consistent objects for the North and South directions with the aim of permitting navigation among all available objects (this is a preferred aim and feature and may be provided independently or implemented by other algorithms).

Referring to Figure 18a, an object 510 is shown to the West of an object 512 which has the focus, and an object 514 is shown to the South of the object 512. A further object 516 is located to the South of object 510. Using the algorithms described above, object 510 is considered as the West candidate and object 514 is considered as the South candidate. A further object 518 is located such that it would not be accessed departing from object 510, since object 512 would be the East candidate and object 516 would be the South candidate. The fourth step is thus provided to allow object 518 to be accessed.

This step comprises reassigning the North or South candidates to a secondary candidate (respectively arrows 500, 501) if that secondary candidate cannot be accessed departing from the East or West candidates (Fig. 18a), that is, if the secondary candidate cannot be accessed by applying the navigation method to the East or West candidate, or if the secondary candidate intersects the North or South priority zones of the South or North candidates respectively.

Figure 18b illustrates a similar situation, but where object 518 is closer to object 514.

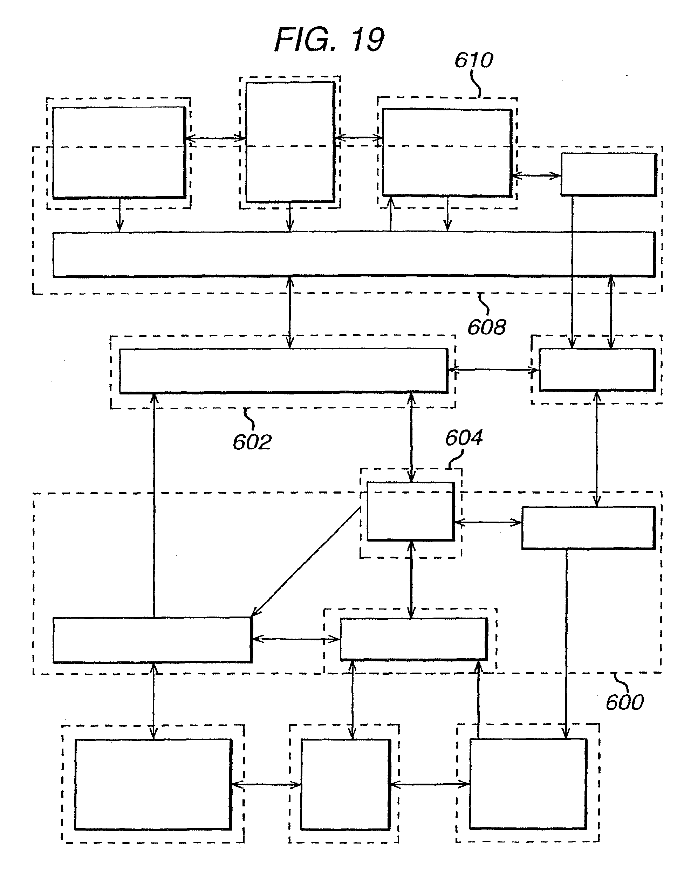

Referring now to Fig. 19, the effect of implementing the above algorithms in a typical document will be explained. In the figure, rectangles shown in full lines correspond to active objects in the document and rectangles shown in dotted lines correspond to zones defining a hyperlink.

The arrows show possible navigation paths based on the algorithms described above. It can be seen that all objects can be traversed in a seemingly logical fashion by moving in one of four directions. Furthermore, it will be noted that the algorithm is not necessarily reversible, for example an upward move from the bottom left rectangle of hyperlink 600 leads to rectangle 602, but a downward move from there leads to rectangle 604. Similarly, several objects lead downward to the elongate rectangle at the bottom of hyperlink 608 (which may be a line of text, for example) but an upward move from there only leads to object 610.

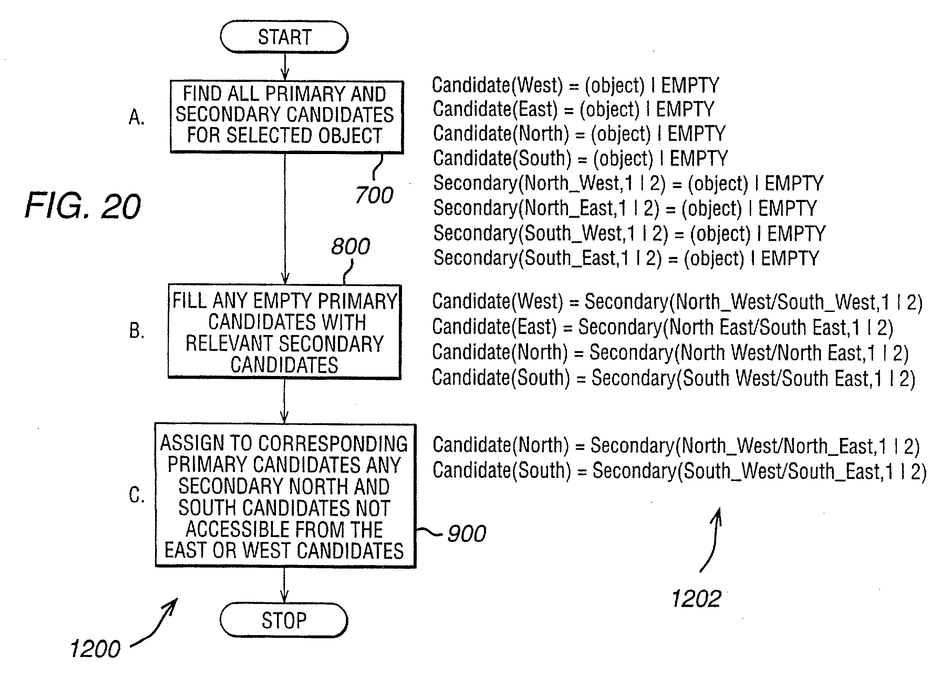

Processes used in the preferred embodiment for generating a list of candidate objects will now be described in more detail, with particular reference to Figures 20 to 23.

For the sake of convenience and to aid understanding, several sets of pseudo-variables are referred to in the following illustration. The variables are defined as follows:
Candidate (<primary direction>): an array of 4 variables which refer to the North, East, South and West (primary) candidate objects.
Secondary (<secondary direction>, <order = 1 or 2>): a multidimensional array of 8 variables, corresponding to the 1^{st} and 2^{nd} secondary candidates in the North West, North East, South West and South East non-priority zones. Order 1 corresponds to the first secondary candidate in the relevant non-priority zone, order 2 corresponds to the second secondary candidate, and so on. As noted above, further or fewer orders of secondary candidate may be envisaged, but only two are considered for the purpose of this illustration.

Figure 20 illustrates the sequence of processes for generating the list of candidate objects. A brief summary of the processes A to C (700, 800, 900) is presented in the left hand column 1200, and approximate corresponding pseudocode relating to the assignments which may be made during the execution of each process is presented in the right hand column 1202.

Process A 700 corresponds approximately to the first and second steps described above; process B 800 corresponds approximately to the third step described above, and process C 900 corresponds approximately to the fourth step described above.

Process A comprises the step of finding all primary and secondary candidates for the current selected object. Process B 800 comprises the step of filling any empty primary candidates with relevant secondary candidates. Finally, process C 900 comprises the step of assigning to corresponding primary candidates any secondary North and South candidates which are not accessible from the East and West primary candidates.

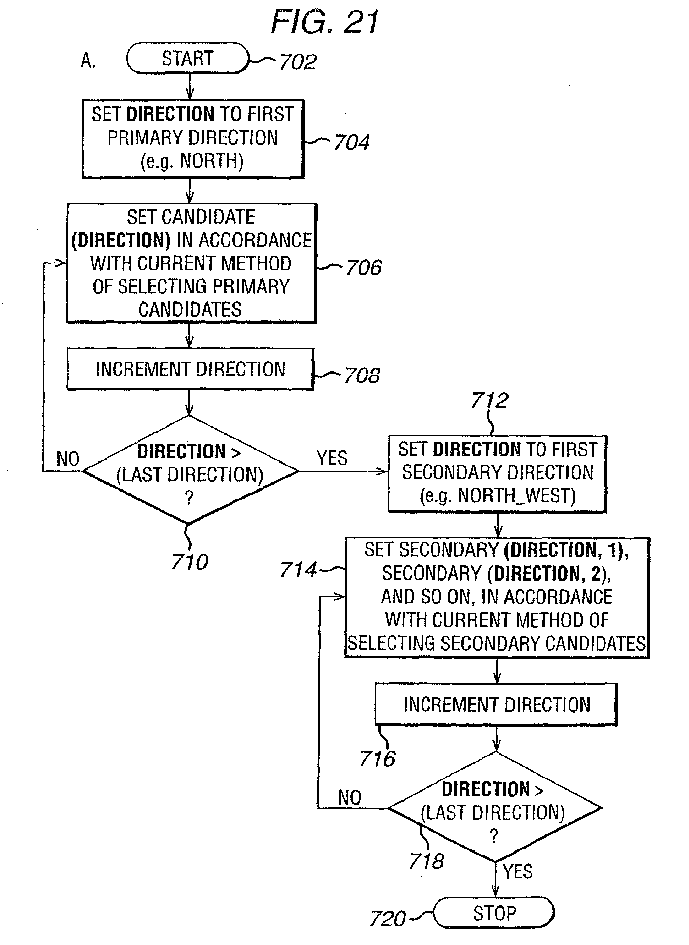

With reference to Figure 21, process A 700 will now be described in more detail. First of all, the primary candidates are assigned in steps 704, 706, 708, 710. This assignment is in accordance with the current method used to select primary candidates; for example, choosing the nearest object in the East priority zone in the case of the East candidate. When all of the primary candidates have been assigned (or left blank, as the case may be), the secondary candidates are then assigned in corresponding steps 712, 714, 716, 718. Again, such candidates are assigned in accordance with the current method of selecting secondary candidates, such as any of those described in more detail above.

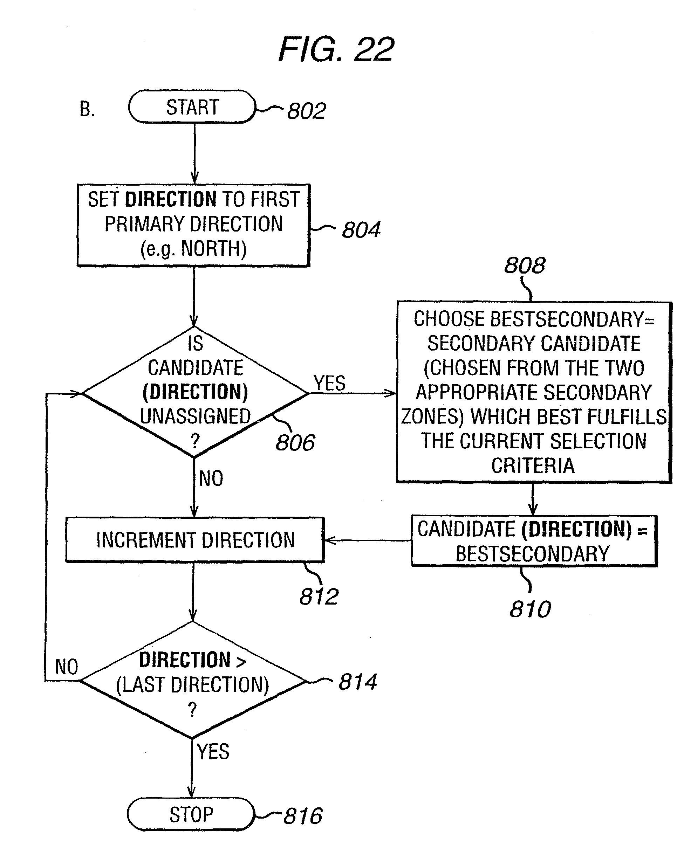

With reference to Figure 22, the process B 800 is now described. Steps 804, 814, 816 allow all of the primary candidates to be examined in turn by step 806. Any candidates which do not have an assigned object, that is to say, were left blank in process A, are then assigned appropriately by steps 808, 810. As before, the exact algorithm used in step 808 can be customized to any extent, but in the preferred embodiment is the algorithm described in more detail above.

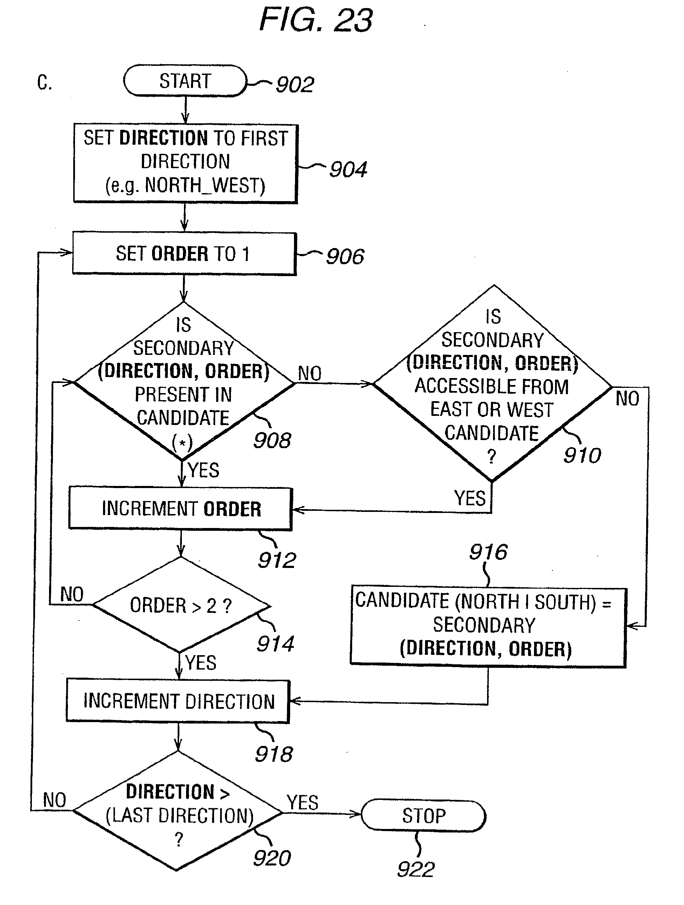

With reference to Figure 23, the final process C 900 is now described. Steps 904, 906, 912, 914, 918, 920 provide an outer and inner loop, running through secondary candidates from all of the non-priority zones in turn. As mentioned above, a maximum of two orders of secondary candidate are considered here (in other words, only a first secondary candidate and a second secondary candidate are considered for each non-priority zone). In steps 908, 910, the algorithm checks to see whether the secondary candidate under consideration is accessible from the East or West candidate objects. If not, the appropriate one of the North or South (primary) candidate is replaced with the secondary candidate in question. For example, if a secondary candidate to the South East is found not to be accessible from the Eastern or Western candidates, it will be set as the new South candidate object.

The preferred algorithm to determine whether or not the secondary candidate under consideration is accessible from the East or West candidate objects tests simply whether or not the secondary candidate falls within one of the four priority zones of the East or West candidate object. This affords the advantage of being able to access any object without requiring an unduly complicated algorithm. In particular, the test is not as sophisticated as the combination of processes A, B and C used to calculate the candidate objects for the current object, and nor need it necessarily be.

At the end 922 of the last process, the Candidate() array contains the correct four primary candidate objects. As mentioned above, when the above processes are consistently applied, each object of interest in a web page can be accessed from any other object of interest (objects which cannot be selected, navigated to/from or otherwise interacted with are generally be considered as not being of interest).

Modifications may be made to the details of the flowcharts shown in Figures 20 to 23, particularly with regard to omitting, modifying or adding certain stages, so as to incorporate the details of the various different embodiments described herein, for example.

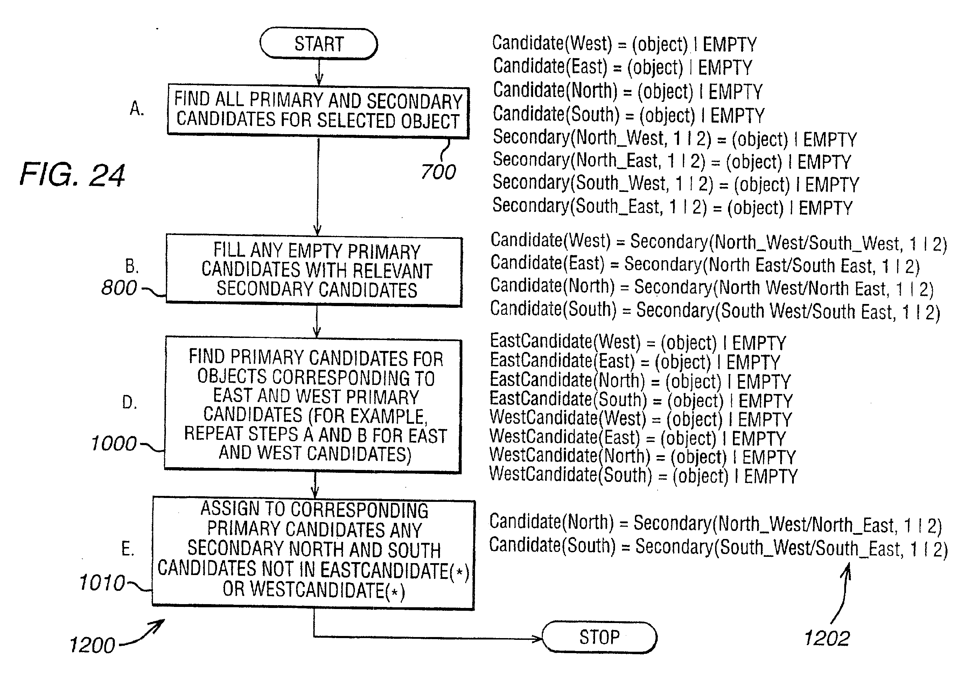

One such modification is illustrated in Figures 24 to 26. In this algorithm, the step of checking whether or not a secondary candidate is accessible from the East or West candidate is performed more rigorously, yielding potentially better results at the expense of speed. In this embodiment, a further pair of arrays is also used:
EastCandidate (<primary direction>), WestCandidate (<primary direction>): the same structure as the Candidate (...) array, but containing the candidate objects from the point of view of the Eastern and Western candidate objects respectively.

As before, process A 700 comprises the step of finding all primary and secondary candidates for the current selected object and process B 800 comprises the step of filling any empty primary candidates with relevant secondary candidates. A new process D 1000 comprises the step of finding primary candidates for objects corresponding to East and West primary candidates (for example, repeating the above processes A and B for East and West candidates). Finally, process E 1100, similar in structure to process C 900, comprises the step of assigning to corresponding primary candidates any secondary North and South candidates which are not present in any of the members of EastCandidate() and WestCandidate().

Processes A 700 and B 800 operate as previously, and will not be further described.

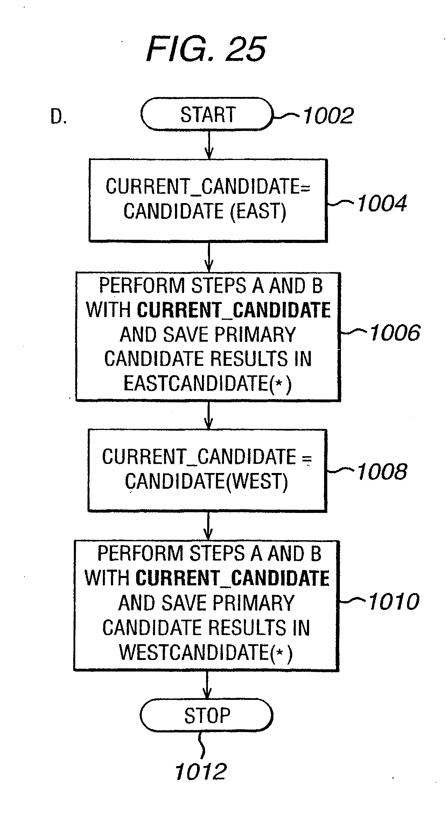

With reference to Figure 25, the process D 900 is now described. Steps 1004, 1006 effectively serve to repeat processes A 700 and B 800 but from the point of view of a different object (in this case the Eastern candidate of the current object). In the preferred embodiment, processes A and B are embodied by a single function which accepts as a parameter, amongst other things, a reference to an object which is to be considered the "current object". Thus the steps 1004, 1006 can be carried out relatively efficiently. In variants of the preferred embodiment, processes A and B are embodied by a plurality of functions. Steps 1008, 1010 are equivalent to steps 1004, 1006 but for the Western candidate of the current object. It should be emphasized that the candidate objects determined for the East and West objects are determined to a first degree of approximation only, and are not refined in accordance with additional processes D and E. This saves computation, and can avoid a potential infinite recursion.

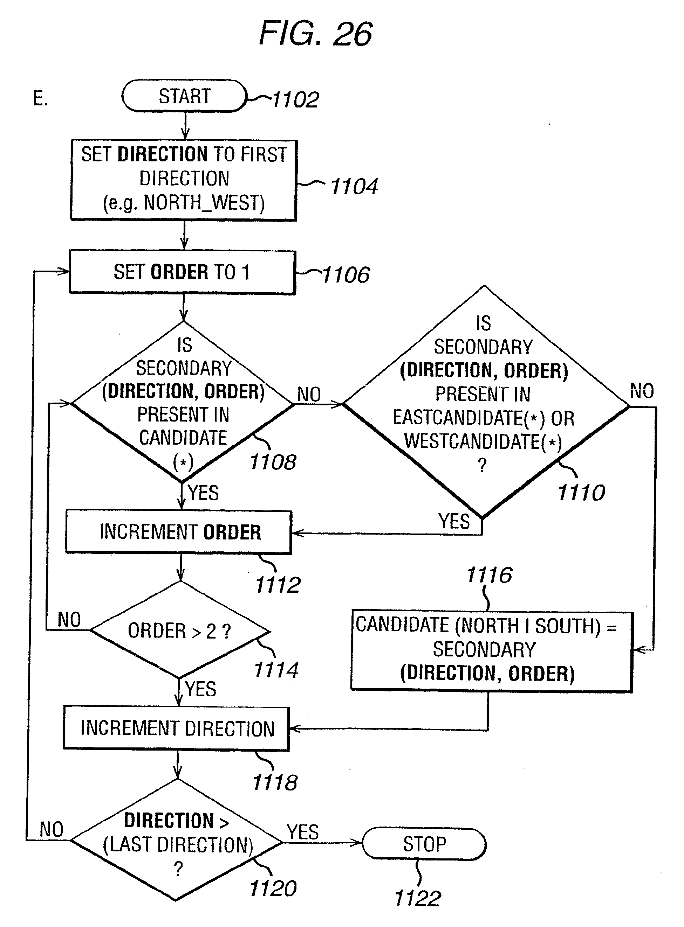

With reference to Figure 26, the alternative final process E 1100 is now described. As before, steps 1104, 1106, 1112, 1114, 1118, 1120 provide an outer and inner loop, running through secondary candidates from all of the non-priority zones in turn. As mentioned above, a maximum of two orders of secondary candidate are considered here (in other words, only a first secondary candidate and a second secondary candidate are considered for each non-priority zone). In steps 1108, 1110, the algorithm checks to see whether the secondary candidate under consideration is included within either the EastCandidate() or WestCandidate() arrays (in other words, whether or not it is accessible from the East or West candidate objects). If not, the appropriate one of the North or South (primary) candidate is replaced with the secondary candidate in question. For example, if a secondary candidate to the South East is found not to be accessible from the Eastern or Western candidates, it will be set as the new South candidate object.

It can be seen that the methods described herein for navigating around a web page are particularly suited to a receiver/decoder, amongst other things because of the simplicity of the controls, requiring only a reasonably standard remote control. In a variant of the preferred embodiment, all of the candidate objects for all of the objects in the web page are calculated once after the page has loaded, and are stored in a table for later use. This can afford the advantage of faster processing when navigating (by looking up the candidate object values in the table rather than calculating them each time). However, the dynamic nature of the calculation of candidate objects also yields benefits, since by not storing a table it requires less of the relatively scarce memory in a receiver/decoder. It can also allow a web page to be navigated whilst it is in the process of loading, for example, where the relative positions and sizes of the objects on the page may not be static.

"Dynamic" navigation can also be of use in relation to javascript, which may not only show and hide objects on a web page (thus affecting the navigational relationships between all of the objects on the page) but may also create objects while a page is being displayed. Dynamic HTML may also hide and show objects on a web page, and consequently also benefits from the advantages of the dynamic navigation methods described above.

All features described herein may be independently provided, unless otherwise stated. The appended abstract is incorporated herein by reference. Reference numerals appearing in the claims shall have no limiting effect.

## Claims

1. A method of assigning a navigation order to a plurality of objects to be displayed at respective positions on a display, these objects being assigned to a plurality of defined directions based on the positions of the objects, **characterized in that** said method comprises a step of including ascending or descending a level of hierarchy between these objects.

2. A method according to claim 1, **characterized in that** objects are assigned to directions in a predetermined order.

3. A method according to claim 1 or 2, **characterized in that** it further comprises steps of selecting a plurality of candidate objects from said plurality of objects, of selecting from said plurality of candidate objects a set of accepted objects and of assigning the set of accepted objects to directions.

4. A method according to claim 1, 2 or 3, **characterized in that** assignment of objects to directions is such that all objects of interest on a page can be accessed.

5. A method according to any preceding claim, **characterized in that** it comprises following a hyper-link.

6. A method according to any preceding claim, **characterized in that** a group of objects may be traversed as a single entity at a first level and individual items or subgroups may be traversed at a second level.

7. A method according to claim 6, **characterized in that** said group of objects is a complex object.

8. A method according to claim 7, **characterized in that** said complex object is "TextField", "List", "IsMap", "UseMap" or "Frame".

9. A method according to any preceding claim, **characterized in that**, in a document comprising a plurality of frames, entire frame may be traversed at a first level and objects within each frame may be traversed at a second level.

10. A method according to any preceding claim, **characterized in that** it further comprises classifying said plurality of objects into primary and secondary candidate objects, with respect to a or the current object.

11. A method according to claim 10, **characterized in that** said step of classifying the plurality of objects comprises determining whether or not each object fulfils a particular positional relationship with respect to the current object.

12. An apparatus for assigning a navigation order to a plurality of objects at respective positions on a display, comprising means for assigning these objects to a plurality of defined directions based on the positions of the objects, **characterized in that** said apparatus further comprises means for ascending or descending a level of hierarchy between these objects.

13. An apparatus according to claim 12, **characterized in that** said means for assigning objects to a plurality of directions are adapted to assign objects to directions in a predetermined order.

14. An apparatus according to claim 12 or 13, **characterized in that** it further comprises means for selecting a plurality of candidate objects from said plurality of objects, means for selecting from said plurality of candidate objects a set of accepted objects and means for assigning the set of accepted objects to directions.

15. An apparatus according to claim 12, 13 or 14, **characterized in that** said means for assigning objects to directions are adapted to allow all objects of interest on a page to be accessed.

16. An apparatus according to any of claims 12 to 15, **characterized in that** it comprises means for following a hyper-link.

17. An apparatus according to any of claims 12 to 16, **characterized in that** a group of objects may be traversed as a single entity at a first level and individual items or subgroups may be traversed at a second level.

18. An apparatus according to claim 17, **characterized in that** said group of objects is a complex object.

19. An apparatus according to claim 18, **characterized in that** said complex object is "TextField", "List", "IsMap", "UseMap" or "Frame".

20. An apparatus according to any of claims 12 to 19, **characterized in that**, in a document comprising a plurality of frames, entire frame may be traversed at a first level and objects within each frame may be traversed at a second level.

21. An apparatus according to any of claims 12 to 20, **characterized in that** it further comprises means for classifying said plurality of objects into primary and secondary candidate objects, with respect to a or the current object.

22. An apparatus according to claim 21, **characterized in that** said means for classifying the plurality of objects are adapted to determine whether or not each object fulfils a particular positional relationship with respect to the current object.
